# EUROPÄISCHE PATENTSCHRIFT

(11) **EP 3 613 276 B1**
(45) Veröffentlichungstag und Bekanntmachung des Hinweises auf die Patenterteilung: **10.05.2023**
(21) Anmeldenummer: 19178614.4
(22) Anmeldetag: 06.06.2019
(51) Int. Cl.: A01F 12/44

(54) **SELBSTFAHRENDE ERNTEMASCHINE, INSBESONDERE MÄHDRESCHER**
SELF-PROPELLED HARVESTER, IN PARTICULAR COMBINE HARVESTER
AUTOMOTRICE DE RÉCOLTE, EN PARTICULIER MOISSONNEUSE-BATTEUSE

(30) Priorität: 24.08.2018 DE 102018120716
(43) Veröffentlichungstag der Anmeldung: 26.02.2020
(73) Patentinhaber: CLAAS Selbstfahrende Erntemaschinen GmbH, 33428 Harsewinkel (DE)
(72) Erfinder: Lehmberg, Andreas, 33428 Harsewinkel (DE)
(74) Vertreter: CLAAS Gruppe

(56) Entgegenhaltungen:
- EP-A1- 0 282 736
- EP-A1- 3 135 097
- EP-B1- 0 282 736
- FR-A- 1 505 896

## Beschreibung

Die vorliegende Erfindung betrifft einen Mähdrescher mit einem Siebkasten, der ein Gehäuse mit einem Überkehrboden umfasst, wobei das Gehäuse einen Innenraum umgibt, und wobei im Innenraum ein Kornboden zum Transport von Körnern oder Früchten angeordnet ist, wobei der Kornboden den Innenraum
- in einen Siebteil, der oberhalb des Kornbodens angeordnet ist, und
- in einen Überkehrteil, der unterhalb des Kornbodens zwischen diesem und dem Überkehrboden angeordnet ist,
trennt.

Um bei der Erntefahrt den durch die Reifen pro Flächeneinheit auf den Boden wirkenden Druck und die durch ihn verursachte Verdichtung des Bodens möglichst klein zu halten, ist es bekannt, bei selbstfahrenden Mähdreschern Reifen mit möglichst großem Reifendurchmesser zu verwenden. Jedoch ist der Breite solcher selbstfahrenden Mähdrescher bei der Straßenfahrt durch nationale Gesetzgebung Grenzen gesetzt. Gleichzeitig besteht die Tendenz, selbstfahrende Mähdrescher immer größer und daher schwerer zu bauen, um Erntefahrten möglichst gewinnbringend, und daher schnell und effektiv, durchführen zu können. Die schwereren Mähdrescher und/oder größeren Reifen führen jedoch zu einer verringerten Wendigkeit und einem insgesamt ungünstigen Lenkverhalten des selbstfahrenden Mähdreschers.

Aufgabe der vorliegenden Erfindung ist es, ein Lenkverhalten eines selbstfahrenden Mähdreschers bei gleichbleibender Effizienz des Mähdreschers zu verbessern.

Die Aufgabe wird gelöst mit den Merkmalen des unabhängigen Patentanspruchs 1. Vorteilhafte Ausführungsformen sind den abhängigen Ansprüchen entnehmbar.

Dafür wird ein Siebkasten für einen Mähdrescher geschaffen. Der Siebkasten weist ein Gehäuse auf, das einen Innenraum umgibt. Der Innenraum ist durch einen Überkehrboden des Gehäuses begrenzt. Im Innenraum ist ein Kornboden zum Transport von Körnern oder Früchten angeordnet. Der Kornboden trennt den Innenraum in einen Siebteil und einen Überkehrteil. Der Siebteil ist zum Trennen des Erntegutes in Körner oder Früchte, und in Nichtkornbestandteile vorgesehen. Er ist oberhalb des Kornbodens angeordnet. Der Überkehrteil ist zum Transport von Erntegut zu einem Überkehrelevator vorgesehen. Der Überkehrelevator transportiert das Erntegut zurück in ein Dreschwerk. Der Überkehrteil ist unterhalb des Kornbodens zwischen diesem und dem Überkehrboden angeordnet.

Der Siebkasten zeichnet sich dadurch aus, dass das Gehäuse im Überkehrteil eine Einschnürung aufweist. Die Einschnürung verringert die Ausmaße des Gehäuses des Siebkastens im Überkehrteil. Dadurch ist ein Abstand zwischen einer möglichen Position eines Reifens des Mähdreschers und dem Siebkasten vergrößert, so dass der Reifen in diese Position eingelenkt werden kann. Dadurch ist ein Lenkwinkel, um den der Reifen lenkbar ist, vergrößert. Aufgrund des vergrößerten Lenkwinkels ist der Wendekreis des Mähdreschers kleiner, so dass der Mähdrescher um engere Kurven fahren kann, und das Lenkverhalten des Mähdreschers insgesamt verbessert ist. Da die Einschnürung lediglich im Überkehrteil des Siebkastens angeordnet ist, der das Erntegut zurück in das Dreschwerk transportiert, verringert sie nicht das Volumen des Siebteils. Daher vergrößert die Einschnürung nicht die Erntegutverluste und verringert auch nicht die Effektivität der Reinigung. Die Effizienz der Erntemaschine bleibt daher gegenüber einer herkömmlichen Erntemaschine mit einem Siebkasten, der keine solche Einschnürung aufweist, erhalten.

Bevorzugt ist die Einschnürung zumindest so groß wie ein durch eine Position des Reifens bei maximalem Lenkwinkel definierter Eindringbereich des Reifens in einen, insbesondere außerhalb der Einschnürung vorhandenen, Siebkastenquerschnitt. Besonders bevorzugt ist die Einschnürung aber größer als der Eindringbereich vorgesehen, so dass der Reifen nicht an den Siebkasten anstößt.

Die Einschnürung kann sich lediglich über den Eindringbereich erstrecken. Sie kann dafür bogenförmig, beispielsweise oval oder rund, aber auch eckig, beispielsweise stufig, ausgebildet sein. In dieser Ausführungsform könnte sie jedoch für den Transport des Erntegutes im Überkehrteil hinderlich sein.

Um den Transport des Erntegutes im Überkehrteil nicht zu behindern, ist es daher bevorzugt, dass sich die Einschnürung im Überkehrteil vollständig entlang einer Seitenwand des Gehäuses und/oder des Überkehrbodens erstreckt. Dabei ist es weiterhin bevorzugt, dass sie planar ausgebildet ist. Dadurch bildet sie eine glatte Fläche, entlang der das Erntegut gleiten kann, ohne durch die Einschnürung behindert zu sein.

Die Einschnürung ist durch eine

Abkantung der Seitenwand und/oder des Überkehrbodens gebildet. Ein solches Abkanten ist fertigungstechnisch einfach und daher sehr kostengünstig möglich. Vorzugsweise grenzt die an der Seitenwand vorgesehene Einschnürung dabei unmittelbar an den Überkehrboden, und/oder die am Überkehrboden vorgesehene Einschnürung dabei unmittelbar an die Seitenwand an. Dadurch ist ein Materialaufwand für die Seitenwand und den Überkehrboden verringert und der Siebkasten kostengünstiger herstellbar.

Dabei ist die Abkantung bevorzugt in Erstreckungsrichtung auf Höhe des Kornbodens oder unterhalb diesem angeordnet. Dadurch ist sie lediglich im Überkehrteil vorgesehen. Dabei ist es weiterhin bevorzugt, dass sie eine etwa dreieckige Form aufweist. Dabei kann sich der Überkehrboden in einer Förderrichtung des Erntegutes zudem verjüngen. Zum einen ist am Außenumfang des Reifens dadurch, insbesondere zumindest über eine mögliche Kollisionsstrecke des Reifens mit dem Siebkasten, ausreichend Platz für das Positionieren des Reifens bei maximalem Lenkwinkel verfügbar. Zusätzlich kann dadurch das Erntegut in Förderrichtung zum Überkehrelevator zusammengeführt werden.

Bevorzugt weist das Gehäuse zwei einander gegenüberliegende Seitenwände auf. Vorzugsweise ist an jeder der Seitenwände jeweils die Einschnürung vorgesehen. Besonders bevorzugt sind die Einschnürungen an den Seitenwänden spiegelbildlich zueinander vorgesehen. Dadurch ist der Siebkasten im Wesentlichen flächensymmetrisch zu einer Mittelebene ausgebildet. Bei einem schwingend oszillierenden Antrieb des Siebkastens ist so eine im Wesentlichen gleichmäßige Gewichtsverteilung beiderseitig der Mittelebene möglich. Zudem können dadurch zwei an gegenüberliegenden Enden einer gemeinsamen Achse angeordneten Reifen in demselben Lenkwinkel positioniert werden.

Die Einschnürung des Siebkastens vergrößert den für die Reifen zur Verfügung stehenden Bauraum. Vorzugsweise ist sie an beiden Seitenwänden des Siebkastens vorgesehen. Dadurch können die Reifen des Mähdreschers beim Lenken mehr Positionen einnehmen und der Lenkwinkel, in den die Reifen jeweils eingelenkt werden können, ist vergrößert. Der Mähdrescher kann daher einen kleineren Wendekreis fahren und das Lenkverhalten des Mähdreschers ist insgesamt verbessert.

Bevorzugt weist der Mähdrescher einen Aufbau auf, in dem der Siebkasten schwingend antreibbar angeordnet ist. Durch den schwingenden Antrieb des Siebkastens können die Körner oder Früchte entlang dem Kornboden und/oder das Erntegut entlang dem Überkehrboden auch bei nur geringem Gefälle des Siebkastens in Förderrichtung gefördert werden.

Weiterhin bevorzugt endet der Aufbau jeweils oberhalb und seitlich der Reifen oder weist dort jeweils einen Ausschnitt auf, so dass die Reifen in einen Querschnitt des Aufbaus eingelenkt werden können. Der Querschnitt ist durch eine Projektion des Aufbaus auf eine Bodenebene definiert. Dadurch stoßen die Reifen beim Lenken auch nicht an den Aufbau an.

Die Reifen sind an gegenüberliegenden Enden einer Achse des Mähdreschers angeordnet. Dabei ist die Achse bevorzugt eine Lenkachse des Mähdreschers. Dadurch sind die Reifen an der Achse antreibbar. Der Mähdrescher weist zudem eine zweite Achse auf, an deren Enden ebenfalls zwei Reifen angeordnet sind. Die an der zweiten Achse angeordneten Reifen können ebenfalls antreibbar vorgesehen sein. Vorzugsweise ist die Achse die Hinterachse, wobei die zweite Achse die Vorderachse ist.

Weiterhin bevorzugt weist der Mähdrescher mindestens ein Paar Träger auf, die v- förmig zueinander angeordnet sind. Die Träger sind bevorzugt Bestandteile eines Tragwerks des Mähdreschers, das einen geschlossenen Kraftfluss im Mähdrescher ermöglicht. Vorzugsweise sind sie gemeinsam an einen Achsbolzen, der zur Aufhängung der Achse vorgesehen ist, angebunden. Ganz besonders bevorzugt ist die Achse an zwei Achsbolzen aufgehängt. In dieser Ausführungsform ist es bevorzugt, dass der Mähdrescher zwei Paar Träger aufweist, die jeweils v- förmig zueinander angeordnet sind und jeweils gemeinsam an einem der beiden Achsbolzen angebunden sind.

Vorzugsweise sind die Träger in Fahrtrichtung vor den Achsbolzen und unterhalb des Siebkastens angeordnet. Durch die v- förmige Anordnung der Träger zueinander ist ein freier Bauraum in Fahrtrichtung vor der Achse und unterhalb des Siebkastens vergrößert. Der Reifen kann dadurch beim Lenken in diesem Bauraum positioniert werden. Auch dies vergrößert den maximalen Lenkwinkel der Reifen.

Die Erfindung ermöglicht die Verwendung von Reifen mit einem größeren Durchmesser und/oder die Vergrößerung des maximalen Lenkwinkels der Reifen. Dadurch können die Verdichtung des Bodens während einer Erntefahrt und/oder das Lenkverhalten des Mähdreschers verbessert werden. Da die Einschnürung im Überkehrteil des Siebkastens angeordnet ist, schränkt sie die Effizienz des Mähdreschers nicht ein.
Die Erfindung ist im Folgenden anhand von Figuren beschrieben. Die Figuren sind lediglich beispielshaft und schränken den allgemeinen Erfindungsgedanken nicht ein. Es zeigen:
- Fig. 1: schematisch eine Seitenansicht eines Mähdreschers nach dem Stand der Technik;
- Fig. 2: einen Ausschnitt aus einer Bodenansicht eines erfindungsgemäßen Mähdreschers;
- Fig. 3: in (a) eine perspektivische Ansicht eines Siebkastens, in (b) ein Schnittbild durch eine Teilansicht des Siebkastens aus (a), und in (c) schematisch eine Positionierung des Siebkastens aus (a) in den Mähdrescher aus Fig. 2; und
- Fig. 4: in (a) ein Schnittbild durch den Mähdrescher vom Heck des Mähdreschers aus, in (b) ein Schnittbild durch den Mähdrescher von der Front des Mähdreschers aus, und in (c) und (d) jeweils einen Ausschnitt aus dem Mähdrescher von der Front des Mähdreschers aus in einer perspektivischen Ansicht.

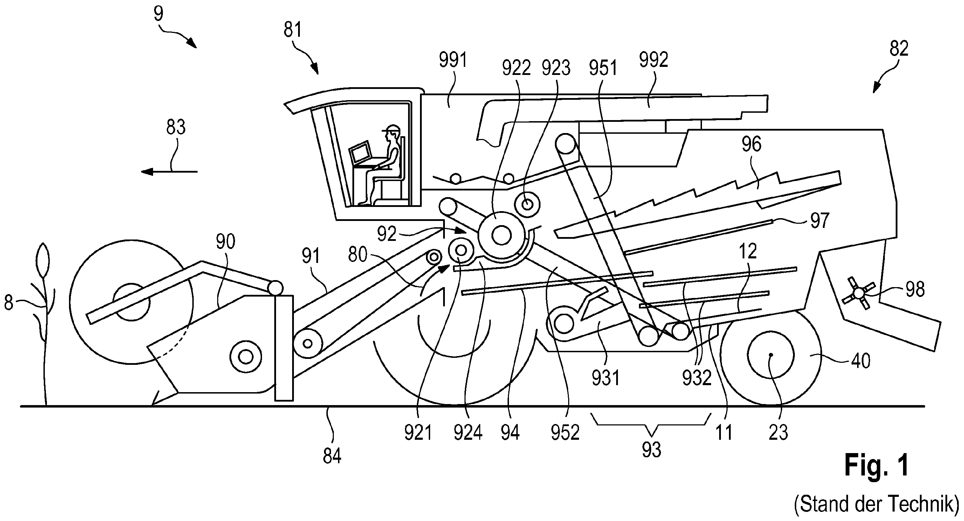

Das bei der Ernte mittels eines Mähdreschers 9 von einem Vorsatzgerät 90 bodennah abgeschnittene Erntegut 8 wird von einer Vielzahl Aggregaten, die zur Förderung und/oder zur Verarbeitung eines ihn durchlaufenden Erntegutstromes vorgesehen sind, verarbeitet. Dafür wird es mittels des Vorsatzgerätes 90, das an einer Front 81 des Mähdreschers 9 angeordnet ist, während einer Erntefahrt bodennah abgeschnitten und einem Schrägförderer 91 zugeführt. Der Schrägförderer 91 fördert das Erntegut 8 in einer Förderrichtung 80 in den Mähdrescher 9. Dabei fährt der Mähdrescher 9 in eine Fahrtrichtung 83. Fig.1 zeigt schematisch eine Seitenansicht eines solchen selbstfahrenden Mähdreschers 9 nach dem Stand der Technik.

Das Erntegut 8 gelangt vom Schrägförderer 91 aus zunächst in eine Dresch- und Trenneinrichtung 92. Die Dresch- und Trenneinrichtung 92 weist mehrere Trommeln 921, 922, 923 auf. Um einen hohen Erntegutdurchsatz bei geringen Körnerverlusten zu ermöglichen, weist sie eine Vorbeschleunigungstrommel 921 auf. Der Vorbeschleunigungstrommel 921 ist in Förderrichtung 80 eine Dreschtrommel 922 nachgeordnet. Zudem weist die Dresch- und Trenneinrichtung 92 eine Strohwendetrommel 923 auf.

Die bereits an der Dresch- und Trenneinrichtung 92 ausgedroschenen Körner oder Früchte werden an einem Abscheidekorb 924, der ebenfalls der Dresch- und Trenneinrichtung 92 zugeordnet ist, als Korn-Spreu-Gemisch abgeschieden. Anschließend werden sie über einen Vorbereitungsboden 94 einer Reinigungsvorrichtung 93 zugeführt. Die Reinigungsvorrichtung 93 trennt die Körner oder Früchte von Nichtkornbestandteilen. Sie umfasst ein Gebläse 931 sowie mehrere Siebe 932.

Die Siebe 932 sind gemeinsam in einem herkömmlichen Siebkasten (nicht dargestellt) angeordnet. Mit den Sieben 932 werden die verbleibenden Spreu und Halmteile von den Körnern oder Früchten getrennt.

Mit einem von dem Gebläse 931 erzeugten Luftstrom (nicht gezeigt) werden dabei die Spreu und Halmteile zum rückwärtigen Heck 82 des Mähdreschers 9 geblasen. Dadurch können an den Sieben 932 mehr Körner oder Früchte von den Spreu- und Halmteilen getrennt werden. Die Spreu- und Halmteile verlassen am Heck 82 den Mähdrescher 1. Die abgeschiedenen Körner oder Früchte werden über einen Kornboden 12 einem Kornelevator 951 zugeführt, mit dem sie in einen Korntank 991 transportiert werden.

Mit der Dresch- und Trenneinrichtung 92 ausgedroschenes, überwiegend aus Stroh bestehendes Halmgut wird über die der Dreschtrommel 922 nachgeordnete Strohwendetrommel 923 einer Einrichtung zur Restkornabscheidung 96 zugeführt. Diese ist hier aus Hordenschüttlern 96 gebildet. Sie kann aber auch als Axialrotor (nicht gezeigt) oder anders ausgebildet sein. Im Folgenden werden die Begriffe Restkornabscheidung 96 und Hordenschüttler synonym verwendet. Die Erfindung ist aber nicht auf Mähdrescher 9 mit Hordenschüttler beschränkt, sondern bezieht sich auch auf Mähdrescher 9 mit einer anderen Restkornabscheidung 96.

Die Hordenschüttler 96 fördern das Halmgut zum Heck 82 des Mähdreschers 9. Dabei werden sie schwingend bewegt. Dadurch werden noch im Halmgut verbliebene Restkörner oder Restfrüchte vom Stroh abgeschieden.

Die Restkörner oder Restfrüchte fallen auf einen Rücklaufboden 97, der sie in Förderrichtung 80 zum Vorbereitungsboden 94 fördert. Von dort aus werden sie gemeinsam mit dem bereits am Abscheidekorb 924 abgeschiedenen Erntegut 8 zu den Sieben 932 der Reinigungsvorrichtung 93 gefördert.

Auch das Stroh verlässt am Heck 82 den Mähdrescher 1. Dort kann es mittels eines Strohhäckslers 98 zerkleinert werden oder es wird ungehäckselt als Schwad auf dem Boden 84 abgelegt.

Weiteres Erntegut 8, das sich am Boden (nicht bezeichnet) des Mähdreschers 9 sammelt, wird über einen Überkehrboden 11 einem Überkehrelevator 952 zugeführt, der es erneut in die Dresch- und Trennvorrichtung 92 fördert.

Die im Korntank 991 gesammelten Körner und Früchte können über ein Abtankrohr 992 in einen Abtankwagen (nicht gezeigt) abgetankt werden.

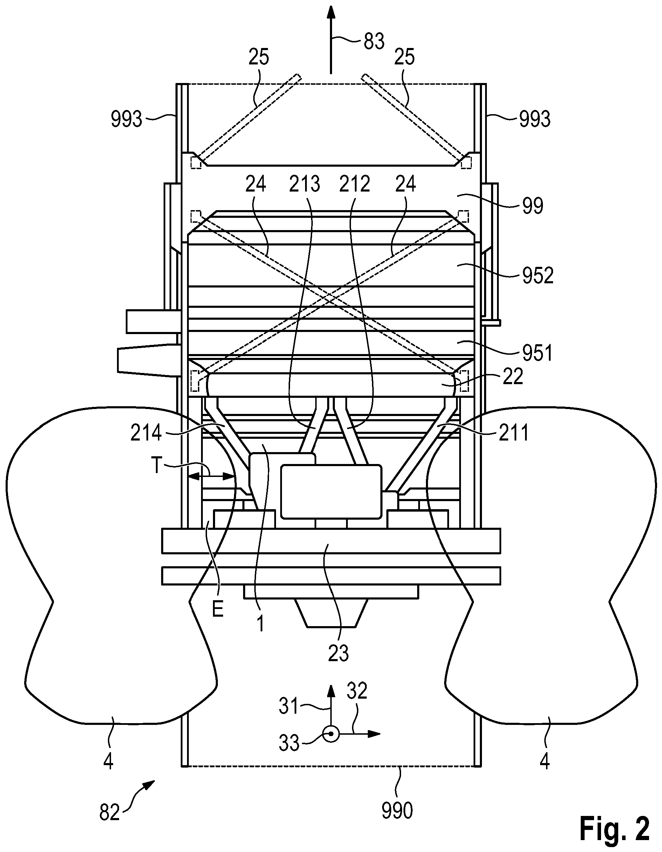

Fig. 2 zeigt einen Ausschnitt aus einer Bodenansicht eines erfindungsgemäßen Mähdreschers 9. Der Mähdrescher weist einen Aufbau 99 auf, der an einem Tragwerk (nicht bezeichnet) angeordnet ist. Der Aufbau 99 ist auch zur Aufnahme der das Erntegut 8 verarbeitenden Aggregate des Mähdreschers 9 vorgesehen. Das Tragwerk ermöglicht einen geschlossenen Kraftfluss im Mähdrescher 9. Es ist an einer Vorderachse (s. Fig. 1) und einer Hinterachse 23 des Mähdreschers 9 angebunden. Die Hinterachse 23 ist am Heck 82 des Mähdreschers 9 angeordnet und hier als Lenkachse ausgebildet. Der Mähdrescher 9 weist daher einen Hinterradantrieb auf. Die Begriffe Achse 23 und Hinterachse sind im Folgenden synonym verwendet.

An gegenüberliegenden Enden (nicht bezeichnet) der Hinterachse 23 ist jeweils ein Reifen 40 (s. Fig. 1) angeordnet. Die folgenden Figuren zeigen anstelle der Reifen 40 jedoch jeweils schematisch eine durch das Lenken des Reifens 40 definierte Hüllkurve 4. Die Hüllkurve 4 umhüllt alle Positionen, in denen der Reifen 40 positioniert sein kann.

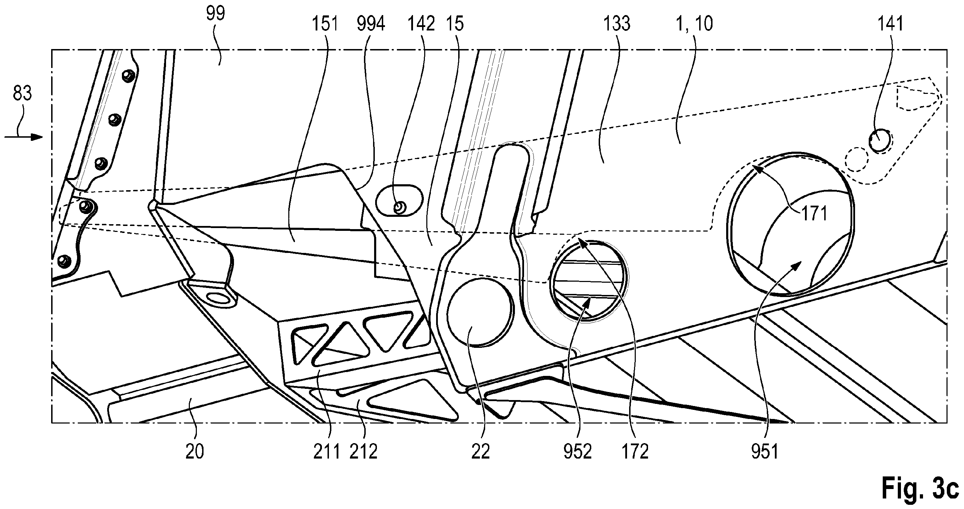

Der Aufbau 99 endet jeweils oberhalb und seitlich der Reifen 40 (s. auch Fig. 3(c)), so dass die Reifen 40 jeweils in einen Querschnitt 990 des Aufbaus 99 eingelenkt werden können. Dafür weist der Aufbau 99 hier einen Ausschnitt 994 (s. Fig. 3(c)) auf.

Der Querschnitt 990 ist durch eine Projektion des Aufbaus 99 auf den Boden definiert. Er ist hier durch gestrichelte Linien schematisch angedeutet und etwa rechteckförmig ausgebildet. Anhand der Hüllkurve 4 ist sichtbar, dass die Reifen 40 in den Querschnitt 990 einlenkbar sind. Sie können dabei mit einer maximalen Eindringtiefe T in den Querschnitt 990 eintauchen. Die maximale Eindringtiefe T bestimmt einen Lenkwinkel, um den die Reifen 40 jeweils eingelenkt werden können. Um die Reifen 40 in einen Eindringbereich E des Querschnitts 990 einlenken zu können, muss in dem Eindringbereich E der Bauraum (nicht bezeichnet) im Mähdrescher 9 frei sein.

Im Aufbau 99 ist ein Siebkasten 1 angeordnet. Der Siebkasten 1 ist schwingend antreibbar. Dadurch können die Körner oder Früchte entlang dem Kornboden 12 und/oder das Erntegut 8 entlang dem Überkehrboden 11 auch bei nur geringem Gefälle des Siebkastens 1 in Förderrichtung 80 gefördert werden. Er ist oberhalb zweier Paare von Trägern 211 - 214 des Tragwerks angeordnet, wobei die Paare 211 - 212, 213 - 214 jeweils v- förmig zueinander angeordnet und jeweils an einen Achsbolzen 20 (s. Fig. 3 (c)) angebunden sind. An ihren den Achsbolzen 20 gegenüberliegenden Enden (nicht bezeichnet) sind die Träger 211 - 214 jeweils an einem Verstärkungsrohr 22 festgelegt, dass Teil des Tragwerks ist. Das Tragwerk umfasst noch weitere Trägerpaare 24, 25, die hier der Übersichtlichkeit halber nur schematisch durch gestrichelte Linien angedeutet sind.

In einer Fahrtrichtung 83 des Mähdreschers 9 vor dem Verstärkungsrohr 22 ist der Überkehrelevator 952 angeordnet. In Fahrtrichtung 83 vor dem Überkehrelevator 952 ist der Kornelevator 951 angeordnet.

Die Achsbolzen 20 sind zur Aufhängung der Achse 23 vorgesehen. Da die Achse 23 die Hinterachse des Mähdreschers 9 ist, sind die Träger 211 - 214 in Fahrtrichtung 83 vor der Achse 23 angeordnet. Zudem sind sie unterhalb des Siebkastens 1 angeordnet. Durch die v-förmige Anordnung der Träger 211 - 214 ergibt sich unterhalb des Siebkastens 1 und in Fahrtrichtung 83 vor der Achse 23 für jeden der Reifen 40 jeweils ein freier Bauraum (nicht bezeichnet), in den dieser eingelenkt werden kann.

Um ein möglichst gutes Lenkverhalten des Mähdreschers 9 bei möglichst großem Reifendurchmesser (nicht dargestellt) der Reifen 40 zu erreichen, weist der Siebkasten 1 ein Einschnürung 15 auf. Die Einschnürung 15 vergrößert den freien Bauraum für die Reifen 40 noch weiter, so dass der Eindringbereich E, in den die Reifen 40 jeweils in den Querschnitt 990 des Mähdreschers 9 einlenken können, noch weiter vergrößert ist.

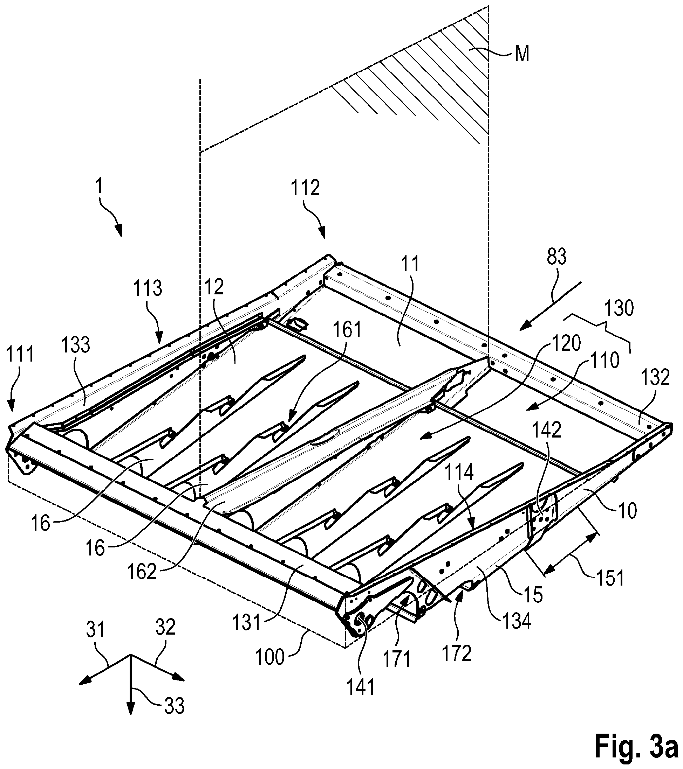

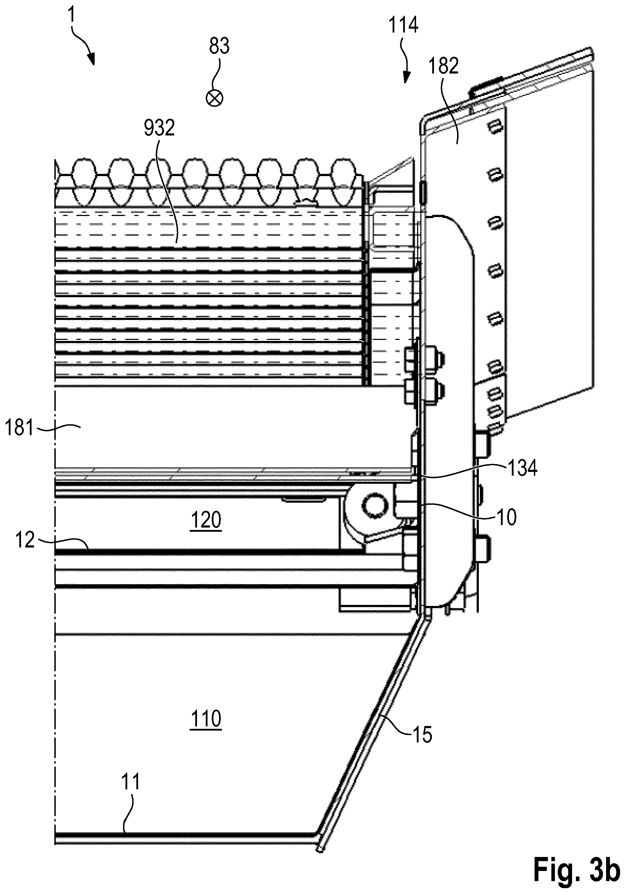

Dies zeigt die Fig. 3. Dabei ist in Fig. 3 (a) eine perspektivische Ansicht des erfindungsgemäßen Siebkastens 1 dargestellt, in (b) ein Schnittbild durch eine Teilansicht des Siebkastens 1 aus (a), und in (c) schematisch eine Positionierung des Siebkastens 1 aus (a) in den Mähdrescher 9 der Fig. 2.

Der Siebkasten 1 umfasst ein Gehäuse 10, das einen Innenraum 130 umgibt. Das Gehäuse 10 weist einen Überkehrboden 11 auf, der den Innenraum 130 begrenzt. Im Innenraum 130 ist ein Kornboden 12 angeordnet, der zum Transport von Körnern oder Früchten vorgesehen ist. Der Kornboden 12 trennt den Innenraum 130 in einen Siebteil 120, der oberhalb des Kornbodens 12 angeordnet ist, und in einen Überkehrteil 110, der unterhalb des Kornbodens 12 zwischen diesem und dem Überkehrboden 11 angeordnet ist. Der Überkehrboden 11 ist zum Rücktransport von noch nicht ausreichend gereinigtem Erntegut 8 in das Dreschwerk 92 des Mähdreschers 9 vorgesehen. Es fördert das Erntegut 8 zunächst zum Überkehrelevator 952, der es in das Dreschwerk 92 transportiert.

Das Gehäuse 10 umfasst zwei einander gegenüberliegende Seitenwände 133, 134, die sich in eine Längsrichtung 31 und in eine Erstreckungsrichtung 33 erstrecken. Zudem umfasst es zwei Querwände 131, 132, die hier in Form von Trägern ausgebildet sind, und sich in eine Querrichtung 32 erstrecken, die quer zur Längsrichtung 31 sowie quer zur Erstreckungsrichtung 33 angeordnet ist. Die Querwände 131, 132 verbinden die Seitenwände 133, 134 miteinander. Die Seitenwände 133, 134 und die Querwände 131, 132 umgeben den Innenraum 130.

Die Seitenwände 133, 134 verjüngen sich gegen die Längsrichtung 31. Dadurch kann Baumaterial für die Seitenwände 133, 134 sowie Gewicht des Siebkastens 1 eingespart werden.

Der Siebkasten 1 weist einen Siebkastenquerschnitt 100 auf, der durch die Seitenwände 133, 134 und die Querwände 131, 132 bestimmt ist. Der Siebkastenquerschnitt 100 ist hier durch eine gestrichelte Linie schematisch angedeutet. Er ist etwa rechteckförmig ausgebildet. Er ist durch eine Projektion der Außenkonturen des Siebkastens 1 auf eine Projektionsfläche (nicht dargestellt) bestimmt.

Am Kornboden 12 sind Längsstreben 16 angeordnet, in denen Siebaufnahmen 161 zur Aufnahme der Siebe 932 vorgesehen sind. Die Längsstreben 16 erstrecken sich etwa parallel der Seitenwände 133, 134. In den dargestellten Siebkasten 1 sind die Siebe 932 in zwei Siebebenen (nicht bezeichnet) einschiebbar, die in Erstreckungsrichtung 33 zueinander beabstandet sind.

Eine Querstrebe 131 ist an einer Vorderseite 111 in Fahrtrichtung 83 vorn angeordnet, die andere Querstrebe 132 an einer Rückseite 112 in Fahrtrichtung 83 hinten.

Unterhalb der an der Vorderseite 111 angeordneten Querstrebe 131 in Längsrichtung 31 nach hinten versetzt ist in den Seitenwänden 133, 134 jeweils eine erste Aufnahme 171 vorgesehen, in die der Kornelevator 951 angeordnet wird. In Fahrtrichtung 83 dahinter ist in den Seitenwänden 133, 134 jeweils eine zweite Aufnahme 172 vorgesehen, die den Überkehrelevator 952 aufnimmt. Der Kornelevator 951 und der Überkehrelevator 952 erstrecken sich jeweils in Querrichtung 32.

Der Siebkasten 1 wird mit einem geringen Gefälle (nicht bezeichnet) in den Mähdrescher 9 eingehängt. Um das Erntegut 8 fördern zu können, wird er schwingend angetrieben. Zur Befestigung der dafür erforderlichen Schwingen (nicht dargestellt) sind in den Seitenwänden 133, 134 jeweils zwei Anbindungen 141, 142 vorgesehen. Dafür ist er an Schwingen im Aufbau 99 eingehängt.

Eine Mittelstrebe 162 erstreckt sich von der einen Querstrebe 133 zu der anderen Querstrebe 134 des Siebkastens 1, so dass sie den Siebkasten 1 halbiert. Sie ist parallel einer Mittelebene M angeordnet, die durch die Längsrichtung 31 und die Erstreckungsrichtung 33 aufgespannt ist.

Sowohl die zur Aufnahme der Siebe 932 vorgesehenen Längsstreben 16 als auch die Mittelstrebe 162 verhindern, dass das Erntegut 8 bei im Mähdrescher 9 eingebautem Siebkasten 1 in Hanglage des Mähdreschers 9 vollständig auf eine Seite 113, 114 des Siebkastens 1 rutscht. Weiterhin ist der Siebkasten 1 im Wesentlichen flächensymmetrisch zur Mittelebene M ausgebildet. Dadurch ist eine im Wesentlichen gleichmäßige Gewichtsverteilung beiderseitig der Mittelebene M möglich.

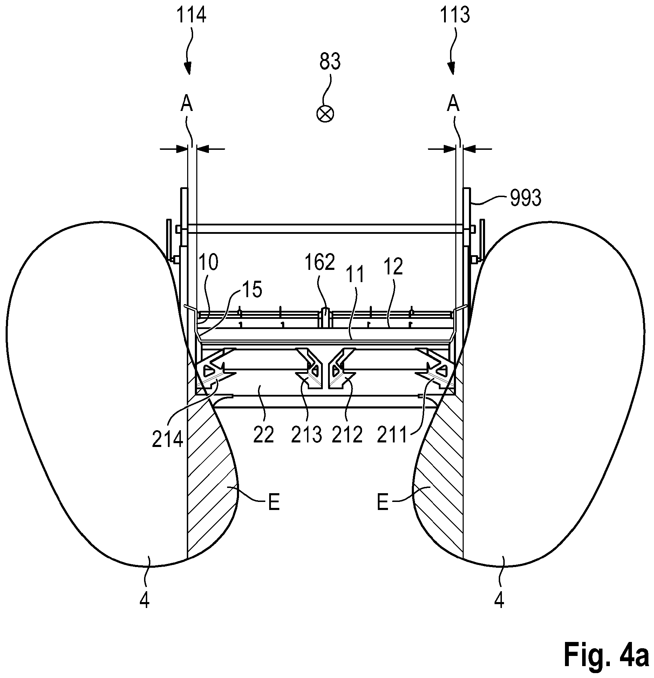

Das Gehäuse 10 weist im Überkehrteil 110 an beiden Seiten 113, 114 jeweils eine Einschnürung 15 auf. Durch die Einschnürung 15 sind die Ausmaße des Gehäuses 10 des Siebkastens 1 im Überkehrteil 110 verringert. Dadurch ist jeweils ein Abstand A1, A2 (s. Fig. 4 (a)) zwischen einer möglichen Position des Reifens 40 des Mähdreschers 9 und dem Siebkasten 1 vergrößert. Die Einschnürungen 15 ermöglichen so jeweils ein größeres Einlenken der Reifen 40 des Mähdreschers 9 in seinen Querschnitt 990. Dadurch ist der Lenkwinkel, um den der Reifen 40 lenkbar ist, vergrößert. Da die Einschnürung 15 lediglich im Überkehrteil 110 des Siebkastens 1 angeordnet ist, verringert sie das Volumen des Siebteils 120 nicht. Die Effizienz des Mähdreschers 9 bleibt daher gegenüber einem Mähdrescher 9 mit herkömmlichem Siebkasten 1, der keine solche Einschnürung 15 aufweist, erhalten.

Die Einschnürungen 15 müssen sich zumindest über eine Kollisionsstrecke 151 erstrecken, entlang der die Reifen 40 beim Lenken mit dem Siebkasten 1 kollidieren würden, wenn dieser keine Einschnürung 15 aufweisen würde. Die Einschnürungen 15 sind hier aber größer vorgesehen, so dass die Reifen 40 nicht an den Siebkasten 1 anstoßen.

Dafür weisen die Seitenwände 133, 134 hier jeweils eine Abkantung auf, durch die die Einschnürungen 15 an den Seitenwänden 133, 134 gebildet sind. Die Einschnürungen 15 erstrecken sich dadurch in einem stumpfen Winkel (nicht bezeichnet) zur Seitenwand. Sie sind dadurch zudem planar ausgebildet, so dass Erntegut 8 entlang den Einschnürungen 15 gleiten kann, ohne durch sie behindert zu sein. Die Abkantungen sind in Erstreckungsrichtung 33 unterhalb des Kornbodens 12 angeordnet. Dadurch erstrecken sie sich nur im Überkehrteil 110 des Siebkastens 1.

Weiterhin grenzen die Einschnürungen 15 unmittelbar an den Überkehrboden 11 an. Eine bei einem herkömmlichen Siebkasten 1 zumeist etwa rechtwinkelig ausgebildete Ecke (nicht gezeigt) zwischen den Seitenwänden 133, 134 und dem Überkehrboden 11 wird hierdurch die Einschnürungen 15 gebrochen. Daher weisen die Einschnürungen 15 auch zum Überkehrboden 11 einen stumpfen Winkel (nicht bezeichnet) auf.

Aufgrund der sich verjüngenden Form der Seitenwände 133, 134 gegen die Längsrichtung 31 sind die Einschnürungen 15 jeweils etwa dreieckförmig ausgebildet. Sie können zudem so ausgebildet sein, dass der Überkehrboden 11 sich in Längsrichtung 31 verjüngt und das Erntegut 8 beim Transport zum Überkehrelevator 952 zumindest geringförmig zusammengeführt wird.

Fig. 3 (b) zeigt ein Schnittbild des Siebkastens 1 in Längsrichtung 31. Sichtbar ist, dass im Siebteil 120 Siebe 932 eingeschoben sind. Oberhalb des Kornbodens 12 ist ein Leitblech 181 angeordnet. Zudem sind an den Seiten 113, 114 des Siebkastens 1 Dichtungen 182 vorgesehen.

Fig. 3 (c) zeigt ein Schnittbild des Mähdreschers 9. Der in den Mähdrescher 9 eingebaute Siebkasten 1 ist durch gestrichelte Linien dargestellt.

Der Aufbau 99 des Mähdreschers 9 weist an beiden Seiten 113, 114 eine Aufbauseitenwand 993 auf. In den Aufbauseitenwänden 993 des Aufbaus 99 ist jeweils der Ausschnitt 994 vorgesehen. Der Ausschnitt 994 endet jeweils oberhalb und seitlich der Hüllkurve 4 der Reifen 40, so dass die Reifen 40 jeweils durch den Ausschnitt 994 in den Querschnitt des Mähdreschers 9 eingelenkt werden können.

Die Einschnürung 15 erstreckt sich nicht nur über die Kollisionsstrecke 151, sondern entlang der gesamten Seitenwand 133, von der Rückseite 112 des Siebkastens 1 bis zur Aufnahme 172 für den Überkehrelevator 952.

Zudem ist ein an einen Achsbolzen 20 angebundenes Trägerpaar 211, 212 sichtbar, das zum Tragwerk des Mähdreschers gehört. Die Achse 23 ist an zwei solchen Achsbolzen 20 aufgehängt, wobei das Tragwerk zwei solche Trägerpaare 211 - 212, 213 - 214 aufweist. Durch die v- förmigen Anordnung der Träger 211, 212 ist der Bauraum unterhalb des Siebkastens 1 für das Einlenken der Reifen 40 daher jeweils frei.

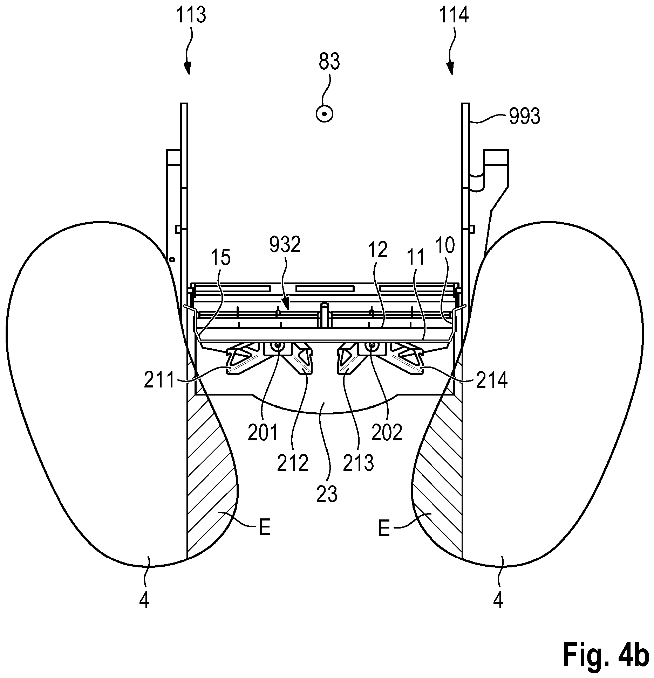

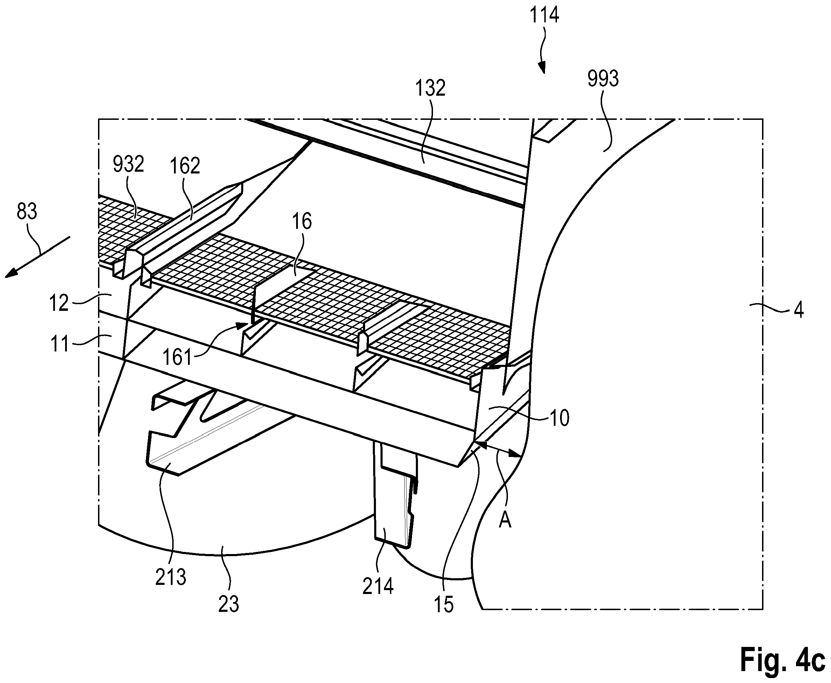

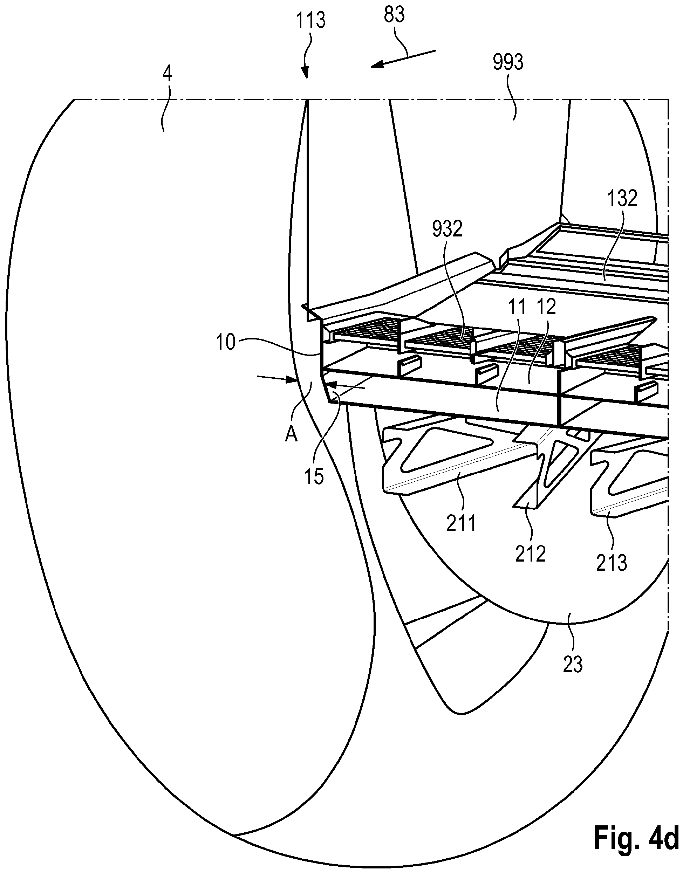

Fig. 4 zeigt in (a) ein Schnittbild durch den Mähdrescher 9 vom Heck 82 des Mähdreschers 9 aus, in (b) ein Schnittbild durch den Mähdrescher 9 von der Front 81 des Mähdreschers 9 aus, und in (c) und (d) jeweils einen Ausschnitt aus dem Mähdrescher 9 von der Front 81 des Mähdreschers 9 aus in einer perspektivischen Ansicht. Dabei zeigen die Figuren (c) und (d) jeweils Ausschnitte an den Seiten 113, 114 des Mähdreschers.

Der Siebkasten 1 ist am Heck 82 des Mähdreschers 9 angeordnet. Er erstreckt sich hier zumindest teilweise oberhalb der Hinterachse 23. Die Hinterachse 23 ist hier als Lenkachse ausgebildet. In den Fig. 4 (a) und (b) sind jeweils der Eindringbereich E der Reifen 40 in den Querschnitt 990 des Mähdreschers 9 sowie die Einschnürung 15 sichtbar.

In den Fig. 4 (c) und (d) ist jeweils der Abstand A der in den Eindringbereich E eingelenkten Reifen 40 zum Siebkasten 1 dargestellt. Sichtbar ist, dass die Einschnürung 15 lediglich im Überkehrbereich 110 unterhalb des Kornbodens 12 angeordnet ist, und die Effizienz des Mähdreschers 9 daher nicht negativ beeinflusst.

### Bezugszeichenliste

- 1: Komponente, Siebkasten
- 10: Gehäuse
- 100: Siebkastenquerschnitt
- 111: Vorderseite
- 112: Rückseite
- 113, 114: Seite
- 11: Überkehrboden
- 110: Überkehrteil
- 12: Kornboden
- 120: Siebteil
- 130: Innenraum
- 131, 132: Querwand
- 133, 134: Seitenwand
- 141, 142: Anbindung für Schwingen
- 15: Einschnürung
- 151: Kollisionsstrecke
- 16: Längsstreben
- 161: Siebaufnahme
- 162: Mittelstrebe
- 171, 172: Aufnahme
- 181: Leitblech
- 182: Dichtung
- 2: Achsbolzen
- 211 - 212, 213 - 214: Träger, Trägerpaar
- 22: Verstärkungsrohr
- 23: Lenkachskörper
- 24, 25: Trägerpaar
- 31: Längsrichtung
- 32: Querrichtung
- 33: Erstreckungsrichtung
- 4: Hüllkurve
- 40: Reifen
- 8: Erntegut
- 80: Förderrichtung
- 81: Front
- 82: Heck
- 83: Fahrtrichtung
- 84: Boden
- 9: Mähdrescher
- 90: Vorsatzgerät, Schneidwerk
- 91: Schrägförderer
- 92: Dresch- und Trenneinrichtung
- 921: Vorbeschleunigungstrommel
- 922: Dreschtrommel
- 923: Strohwendetrommel
- 924: Abscheidekorb
- 93: Reinigungsvorrichtung
- 931: Gebläse
- 932: Sieb
- 94: Vorbereitungsboden
- 951: Kornelevator
- 952: Überkehrelevator
- 96: Restkornabscheidung, Hordenschüttler
- 97: Rücklaufboden
- 98: Strohhäcksler
- 99: Aufbau
- 990: Querschnitt
- 991: Korntank
- 992: Abtankrohr
- 993: Aufbauseitenwand
- 994: Ausschnitt
- A: Abstand
- M: Mittelebene
- E: Eindringbereich
- T: Eindringtiefe

## Patentansprüche

1. Mähdrescher (9) mit einem Siebkasten (1), der ein Gehäuse (10) umfasst, das einen Innenraum (130) umgibt, wobei der Innenraum (130) durch einen Überkehrboden (11) begrenzt ist, und wobei im Innenraum (130) ein Kornboden (12) zum Transport von Körnern oder Früchten angeordnet ist, wobei der Kornboden (12) den Innenraum (130)
• in einen Siebteil (120), der oberhalb des Kornbodens (12) angeordnet ist, und
• in einen Überkehrteil (110), der unterhalb des Kornbodens (12) zwischen diesem und dem Überkehrboden (11) angeordnet ist,
trennt,
**dadurch gekennzeichnet, dass**
das Gehäuse (10) im Überkehrteil (110) eine Einschnürung (15) aufweist, wobei die Einschnürung (15) durch eine Abkantung (135) einer Seitenwand (133, 134) und/oder des Überkehrbodens (11) gebildet ist.

2. Mähdrescher (9) nach Anspruch 1, **dadurch gekennzeichnet, dass** die Einschnürung (15) zumindest so groß ist, dass die Einschnürung (15) einen Eindringbereich (E) derart ausbildet, dass ein dem Mähdrescher zugeordneter Reifen (4) bei max. Lenkwinkel in diesen eindringen kann.

3. Mähdrescher (9) nach einem der vorherigen Ansprüche, **dadurch gekennzeichnet, dass** sich die Einschnürung (15) im Überkehrteil (110) vollständig entlang einer Seitenwand (133, 134) und/oder dem Überkehrboden (11) erstreckt.

4. Mähdrescher (9) nach einem der vorherigen Ansprüche, **dadurch gekennzeichnet, dass** die Einschnürung (15) planar ausgebildet ist.

5. Mähdrescher (9) nach einem der vorherigen Ansprüche, **dadurch gekennzeichnet, dass** die Einschnürung (15) in einer Erstreckungsrichtung (33) auf Höhe des Kornbodens (12) oder unterhalb diesem angeordnet ist.

6. Mähdrescher (9) nach einem der vorherigen Ansprüche, **dadurch gekennzeichnet, dass** die Einschnürung (15) eine etwa dreieckförmige Form aufweist.

7. Mähdrescher (9) nach einem der vorherigen Ansprüche, **dadurch gekennzeichnet, dass** das Gehäuse (10) zwei einander gegenüberliegende Seitenwände (133, 134) umfasst, wobei an jeder der Seitenwände (133, 134) jeweils die Einschnürung (15) vorgesehen ist.

8. Mähdrescher (9) nach einem der vorherigen Ansprüche, **dadurch gekennzeichnet, dass** der Siebkasten (1) flächensymmetrisch zu einer Mittelebene, insbesondere einer Mittelstrebe (162), ausgebildet ist.

9. Mähdrescher (9) nach Anspruch 1 bis 8, **dadurch gekennzeichnet, dass** er einen Aufbau (99) aufweist, in dem der Siebkasten (1) schwingend antreibbar angeordnet ist.

10. Mähdrescher (9) nach Anspruch 9, **dadurch gekennzeichnet, dass** der Aufbau (99) jeweils oberhalb und seitlich der Reifen (4) endet oder dort jeweils einen Ausschnitt (994) aufweist.

11. Mähdrescher (9) nach einem der Ansprüche 1bis 10, **dadurch gekennzeichnet, dass** die Reifen (4) an gegenüberliegenden Enden einer Achse (23), insbesondere einer Hinterachse, des Mähdreschers (9) antreibbar angeordnet sind.

12. Mähdrescher (9) nach einem der Ansprüche 1 bis 11, **dadurch gekennzeichnet, dass** er mindestens ein Paar Träger (211 - 212), insbesondere zwei Paar Träger aufweist, die v-förmig zueinander angeordnet sind, und die gemeinsam an einen Achsbolzen (20), der zur Aufhängung der Achse (23) vorgesehen ist, angebunden sind.

13. Mähdrescher (9) nach einem der Ansprüche 1 bis 12, **dadurch gekennzeichnet, dass** die Träger (211 - 214) in Fahrtrichtung (83) vor dem Achsbolzen (20), und unterhalb des Siebkastens (1) angeordnet sind.

## Claims

1. Combine harvester (9) with a sieve box (1), which comprises a housing (10) which surrounds an interior space (130), wherein the interior space (130) is delimited by a tailings floor (11) and wherein a grain floor (12) for transporting grains or crops is arranged in the interior space (130), wherein the grain floor (12) separates the interior space (130)
• into a sieve part (120), which is arranged above the grain floor (12), and
• into a tailings part (110), which is arranged below the grain floor (12), between this and the tailings floor (11),
**characterized in that**
the housing (10) has a narrowing (15) in the tailings part (110), wherein the narrowing (15) is formed by a chamfer (135) of a side wall (133, 134) and/or the tailings floor (11).

2. Combine harvester (9) according to claim 1, **characterized in that** the narrowing (15) is at least so big that the narrowing (15) forms a penetration area (E), such that a tyre (4) associated with the combine harvester can penetrate into it at a maximum steering angle.

3. Combine harvester (9) according to one of the preceding claims, **characterized in that** the narrowing (15) in the tailings part (110) extends fully along a side wall (133, 134) and/or the tailings floor (11).

4. Combine harvester (9) according to one of the preceding claims, **characterized in that** the narrowing (15) is formed planar.

5. Combine harvester (9) according to one of the preceding claims, **characterized in that** the narrowing (15) is arranged at the level of the grain floor (12) or below it in an extension direction (33).

6. Combine harvester (9) according to one of the preceding claims, **characterized in that** the narrowing (15) has an approximately triangular shape.

7. Combine harvester (9) according to one of the preceding claims, **characterized in that** the housing (10) comprises two side walls (133, 134) opposite each other, wherein the narrowing (15) is provided on each of the side walls (133, 134) in each case.

8. Combine harvester (9) according to one of the preceding claims, **characterized in that** the sieve box (1) is formed two-dimensionally symmetrical with respect to a centre plane, in particular a centre strut (162).

9. Combine harvester (9) according to claim 1 to 8, **characterized in that** it has a body (99) in which the sieve box (1) is arranged such that it can be driven in an oscillating manner.

10. Combine harvester (9) according to claim 9, **characterized in that** the body (99) ends above and to the side of the tyre (4) in each case or has a cut-out (994) there in each case.

11. Combine harvester (9) according to one of claims 1 to 10, **characterized in that** the tyres (4) are arranged, driveable, at opposite ends of an axle (23), in particular a rear axle, of the combine harvester (9).

12. Combine harvester (9) according to one of claims 1 to 11, **characterized in that** it has at least one pair of supports (211 - 212), in particular two pairs of supports, which are arranged v-shaped relative to each other, and which are jointly fastened to an axle bolt (20), which is provided for mounting the axle (23).

13. Combine harvester (9) according to one of claims 1 to 12, **characterized in that** the supports (211 - 214) are arranged in front of the axle bolt (20), in the direction of travel (83), and below the sieve box (1).

## Revendications

1. Moissonneuse-batteuse (9) comprenant un caisson de nettoyage (1) qui inclut un carter (10), lequel entoure un espace intérieur (130), l'espace intérieur (130) étant limité par une table de retour d'ôtons (11), et dans l'espace intérieur (130) étant disposée une table à grains (12) pour le transport de grains ou de produits, la table à grains (12) séparant l'espace intérieur (130)
• en une partie de tamisage (120) qui est disposée au-dessus de la table à grains (12) et
• en une partie de retour d'ôtons (110) qui est disposée au-dessous de la table à grains (12) entre celle-ci et la table de retour d'ôtons (11),
**caractérisée en ce que**
le carter (10) comporte dans la partie de retour d'ôtons (110) un rétrécissement (15), le rétrécissement (15) étant formé par un coudage (135) d'une paroi latérale (133, 134) et/ou de la table de retour d'ôtons (11).

2. Moissonneuse-batteuse (9) selon la revendication 1, **caractérisée en ce que** le rétrécissement (15) est au moins assez grand pour que le rétrécissement (15) crée une zone de pénétration (E) afin qu'un pneumatique (4) associé à la moissonneuse-batteuse puisse y pénétrer avec un angle de braquage maximal.

3. Moissonneuse-batteuse (9) selon une des revendications précédentes, **caractérisée en ce que** le rétrécissement (15) s'étend dans la partie de retour d'ôtons (110) entièrement le long d'une paroi latérale (133, 134) et/ou de la table de retour d'ôtons (11).

4. Moissonneuse-batteuse (9) selon une des revendications précédentes, **caractérisée en ce que** le rétrécissement (15) est de conception planaire.

5. Moissonneuse-batteuse (9) selon une des revendications précédentes, **caractérisée en ce que** le rétrécissement (15) est disposé, dans une direction de rétrécissement (33), à la hauteur de la table à grains (12) ou au-dessous de celle-ci.

6. Moissonneuse-batteuse (9) selon une des revendications précédentes, **caractérisée en ce que** le rétrécissement (15) présente une forme sensiblement triangulaire.

7. Moissonneuse-batteuse (9) selon une des revendications précédentes, **caractérisée en ce que** le carter (10) inclut deux parois latérales en vis-à-vis l'une de l'autre (133, 134), sur chacune des parois latérales (133, 134) étant prévu respectivement le rétrécissement (15).

8. Moissonneuse-batteuse (9) selon une des revendications précédentes, **caractérisée en ce que** le caisson de nettoyage (1) est conçu avec une symétrie de surfaces par rapport à un plan médian, en particulier à un étai médian (162).

9. Moissonneuse-batteuse (9) selon la revendication 1 à 8, **caractérisée en ce qu'**elle comporte une structure (99) dans laquelle le caisson de nettoyage (1) est disposé de manière entraînable en vibrations.

10. Moissonneuse-batteuse (9) selon la revendication 9, **caractérisée en ce que** la structure (99) se termine respectivement au-dessus des et latéralement aux pneumatiques (4) et comporte à cet endroit respectivement une découpe (994).

11. Moissonneuse-batteuse (9) selon une des revendications 1 à 10, **caractérisée en ce que** les pneumatiques (4) sont disposés de manière entraînable à des extrémités opposées d'un essieu (23), en particulier d'un essieu arrière, de la moissonneuse-batteuse (9).

12. Moissonneuse-batteuse (9) selon une des revendications 1 à 11, **caractérisée en ce qu'**elle comporte au moins une paire de supports (211-212), en particulier deux paires de supports, qui sont disposés en forme de V l'un par rapport à l'autre, et qui sont reliés ensemble au niveau d'un boulon d'essieu (20) qui est prévu pour la suspension de l'essieu (23).

13. Moissonneuse-batteuse (9) selon une des revendications 1 à 12, **caractérisée en ce que** les supports (211-214) sont disposés, dans le sens de marche (83), devant le boulon d'essieu (20) et au-dessous du caisson de nettoyage (1).
